Europäisches Patentamt

European Patent Office

Office européen des brevets

(19)

(11) Veröffentlichungsnummer: **0 306 548 B1**

# EUROPÄISCHE PATENTSCHRIFT

(12)

(45) Veröffentlichungstag der Patentschrift: **28.08.91**

(51) Int. Cl.⁵: **A01B 15/14, A01B 3/421**

(21) Anmeldenummer: **87113217.1**

(22) Anmeldetag: **09.09.87**

(54) **Anordnung zum Wenden und Einstellen der Arbeitsbreite von Wendepflügen.**

(43) Veröffentlichungstag der Anmeldung:
**15.03.89 Patentblatt 89/11**

(45) Bekanntmachung des Hinweises auf die
Patenterteilung:
**28.08.91 Patentblatt 91/35**

(84) Benannte Vertragsstaaten:
**AT DE ES FR GB IT**

(56) Entgegenhaltungen:
**FR-A- 2 556 055**
**FR-A- 2 558 027**

(73) Patentinhaber: **WEBER-HYDRAULIK GmbH**
**Heilbronner Strasse 30, Postfach 10**
**W-7129 Güglingen(DE)**

(72) Erfinder: **Obermeyer, Günter**
**Lortzingstrasse 2**
**W-7129 Güglingen(DE)**

(74) Vertreter: **Säger, Manfred, Dipl.-Ing.**
**Säger & Partner Patentanwälte Postfach 81**
**08 09**
**W-8000 München(DE)**

## Beschreibung

Die Erfindung betrifft eine Anordnung zum Wenden und Einstellen der Arbeitsbreite von Wendepflügen gemäß dem Oberbegriff des Hauptanspruches.

Die hierbei neben den Wendezylindern erforderlichen Stellzylinder zum Einstellen der Arbeitsbreite sind an sich bekannt (DE-OS 34 44 130).

Es ist ferner eine gattungsgemäß Vorrichtung gemäß dem Oberbegriff des Hauptanspruches bekannt (DE-OS 35 01 242). Bei dieser bekannten Anordnung weist der Stellzylinder einen schwimmend gelagerten Kolben unter Bildung der Kammer variablen Volumens zwischen ihm und dem eigentlichen, die Kolbenstange aufweisenden Kolben des Stellzylinders auf. Diese Kammer wird über eine durch die Kolbenstange vorgesehene Leitung mit Hydraulikflüssigkeit beaufschlagt und somit mit Hydraulikflüssigkeit gefüllt, wodurch die Kolbenstange des Stellzylinders um ein gewisses Maß zur Einstellung der Arbeitsbreite ausgefahren wird. Zum Wenden wird dann der Stellzylinder vollständig ausgefahren, wodurch die minimale Arbeitsbreite eingestellt wird. Erst danach beginnt selbsttätig das Wenden. Nach vollständig durchgeführter Wendung wird wiederum selbsttätig der Stellzylinder auf die zuvor eingestellte Arbeitsbreite für den Pflug ausgefahren.

Nachdem bei dieser bekannten Vorrichtung eine flexible Schlauchleitung an die Kolbenstange, welche die Leitung zu der Kammer aufweist, angeschlossen ist, kann nicht nur die exakte Positionierung des Zylinders störend beeinflußt werden, sondern bietet auch diese flexible Schlauchleitung beim harten Einsatz in der Landwirtschaft die Gefahr von Beschädigungen. Außerdem ist eine hohlgebohrte Kolbenstange außerordentlich kostenintensiv.

Der Erfindung liegt deshalb die Aufgabe zugrunde, eine gattungsgemäße Anordnung gemäß dem Oberbegriff des Hauptanspruches einfacher und störunanfälliger auszugestalten.

Diese Aufgabe wird bei einer gattungsgemäßen Vorrichtung gemäß dem Oberbegriff des Hauptanspruches erfindungsgemäß durch dessen kennzeichnende Merkmale gelöst.

Bei der erfindungsgemäßen Anordnung wird im Gegensatz zum Stand der Technik nicht die Einstellung direkt am Stellzylinder mittels einer dort vorgesehenen Kammer vorgenommen, sondern das vom bereits eingestellten Stellzylinder verdrängte Volumen an Hydraulikflüssigkeit wird im Gegensatz zum gattungsgemäßen Stand der Technik in einer gesonderten Zwischenkammer gespeichert und nicht wie dort als stufenlos verstellbarer Anschlag an dem Stellzylinder dient und beim Einschwenken auf minimale Arbeitsbreite nicht ausgetauscht wird. Infolgedessen kann ein herkömmlicher Stellzylinder verwendet werden. Auch sind herkömmliche Systeme in einfacher Weise auf die erfindungsgemäße Anordnung nachrüstbar. In jedem Falle bedarf es aber keiner an der Kolbenstange des Stellzylinders anzubringenden flexiblen Schlauchleitung, die besonderem Verschleiß und der Gefahr von Beschädigungen ausgesetzt ist.

Zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:

Figur 1    ein schematisches Schaltbild der Anordnung zum Wenden und Einstellen der Arbeitsbreite von Wendepflügen mit einem Wende-und einem Stellzylinder;

Figur 2    die Einzelheit II gemäß Fig. 1.

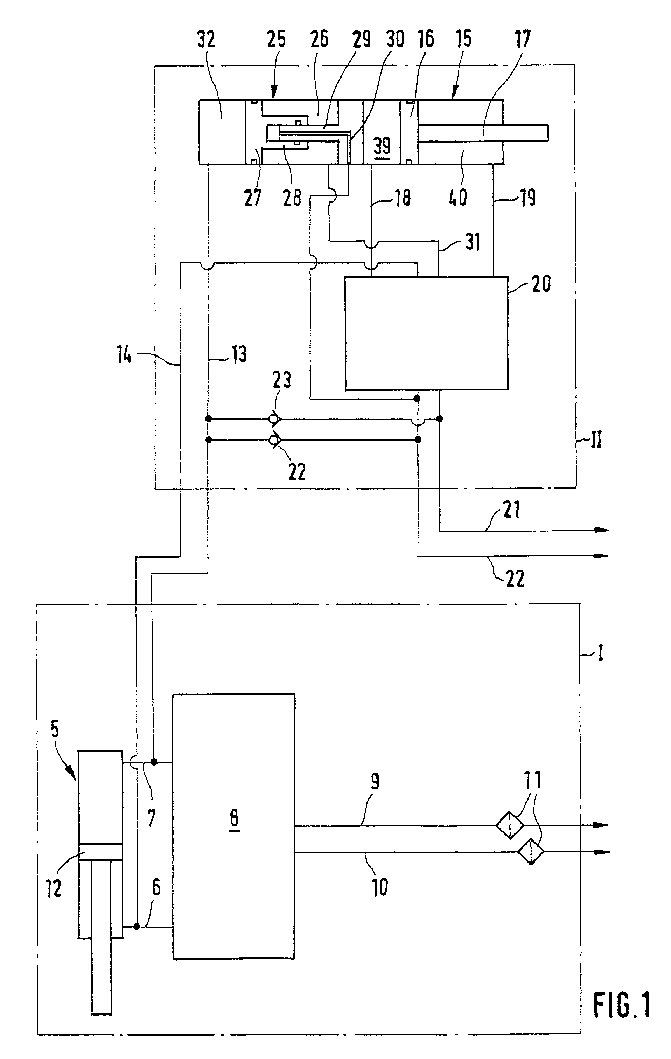

In Fig. 1 ist die Anordnung zum Wenden der Arbeitsbreite von Wendepflügen im schematischen Schaltbild dargestellt. Sie weist zwei Hauptanordnungen I und II auf, die jeweils strichpunktiert dargestellt sind.

Die Teilanordnung I weist einen Wendezylinder 5 auf, der am nicht dargestellten Rahmen des Pfluges angreift. Die Zu- und Ablaufleitungen 6, 7 für den Wendezylinder 5 sind über eine insgesamt mit 8 bezeichnete Vorrichtung mit den Hydraulikleitungen 9, 10 über Siebe 11 mit einem nicht gezeigten Tank bzw. einer Pumpe verbunden. Die Vorrichtung 8 stellt in an sich bekannter Weise sicher, daß die Zu- und Ablaufleitungen 6, 7 des Wendezylinders 5 in der der halben Pflugwendung entsprechenden einen Endstellung des Kolbens 12 des Wendezylinders 5 vertauscht werden.

Mit den Zu- und Ablaufleitungen 6, 7 des Wendezylinders 5 der Teilanordnung I ist die Teilanordnung II mittels einer ersten Direktleitung 13 und einer zweiten Direktleitung 14 verbunden. Die Teilanordnung II weist einen an sich bekannten Stellzylinder 15 mit einem Kolben 16 und einer Kolbenstange 17 auf. Der Stell-zylinder ist über Leitungen 18, 19 mit einer insgesamt mit 20 bezeichneten Hydraulikschaltung verbunden, die im einzelnen noch näher erläutert wird. Ferner ist die Hydraulikschaltung 20 mit zwei Stelleitungen 21, 21a verbunden, die zu einer gesonderten Einstellvorrichtung für die Arbeitsbreite des Wendepfluges führt (nicht gezeigt). Jede der beiden Stelleitungen 21, 21a ist über ein zu diesen hin schließendes Rückschlagventil 22, 23 mit der ersten Direktleitung 13 verbunden.

Ferner ist ein mit dem Stellzylinder 15 einstückig verbundener weiterer Zylinder 25 vorgesehen, dessen einer durch einen Kolben 27 getrennter Zylinderraum 26 von einer definierten Ausgangslage eine Menge variablen Volumens aufnehmen kann. Der Kolben 27 weist eine hohlzylindrische Kolbenstange 28 auf, die an einer gesonderten Führung in Form eines Zylinders 29 kleineren Durchmessers mit einer Leitung 30 geführt ist. Die Leitung 30 führt zu der einen Stelleitung 21a. Die Kammer 26 des weiteren Zylinders 25 ist ferner über eine Leitung 31 mit der Hydraulikschaltung 20 verbunden. Der kolbenseitige zweite Zylinderraum 32 ist an die erste Direktleitung 13 angeschlossen.

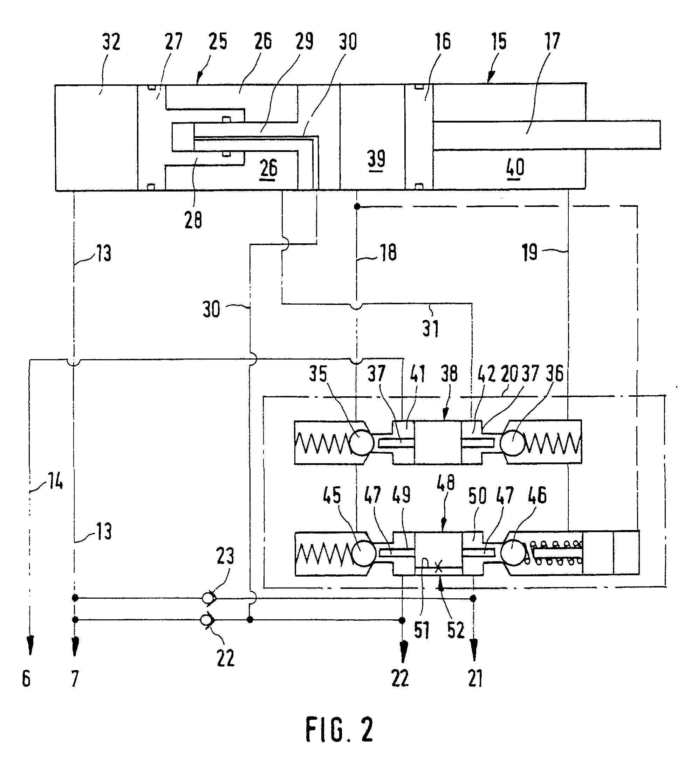

Die Hydraulikschaltung wird mit Bezug auf Fig. 2 näher erläutert.

Die Hyraulikschaltung 20 weist ein erstes Paar Rückschlagventile 35, 36 auch sogenannte Doppelrückschlagventile auf, die mittels der zweiseitigen Kolbenstange 37 eines auch Entsperrkolben genannten ersten Steuerzylinders 38 wechselweise entsperrbar sind. Jedes Rückschlagventil 35, 36 ist hierbei mit einem Zylindrraum 39, 40 des Stellzylinders 15 verbunden und öffnet zu diesen hin.Der eine Zylinderraum 41 des Steuerzylinders 38 ist hierbei mit der zweiten Direktleitung 14 verbunden, die zu Beginn des Wendens und vor dem selbsttätigen Vertrauschen zu der Pumpe führenden Leitung des Wendezylinders 5 (Fig. 1) verbunden ist. Der andere Zylinderraum 42 des ersten Steuerzylinders 38 ist mit der Kammer 26 des weiteren Zylinders 25 verbunden.

Es ist weiterhin ein zweites Paar 45, 46 von Rückschlagventilen vorgesehen, die mittels der zweiseitigen Kolbenstange 47 eines zweiten Steuerzylinders 48 wechselweise entsperrbar sind. Jedes Rückschlagventil 45, 46 ist mit einem Zylinderraum 39, 40 des Stellzylinders 15 verbunden und öffnet zu diesen hin. Die beiden Zylinderräume 49, 50 des zweiten Steuerzylinders 48 sind jeweils mit den Stelleitungen 21, 21a und untereinander mittels einer eine Blende 52 versehenen Hohlbohrung 51 verbunden.

Zum Einstellen des Stellzylinders 15 werden die Stelleitungen 21, 21a mit einer nicht gezeigten Pumpe bzw. dem Tank verbunden. Einer der beiden Zylinderräume des zweiten Steuerzylinders 48, beispielsweise der Zylinderraum 50 wird dann mittels Hydraulikflüssigkeit beaufschlagt. Das Rückschlagventil 46 wird aufgrund des Drucks der Hydraulikflüssigkeit geöffnet und das Rückschlagventil 45 mechanisch von der einen - in der Zeichnung linken-Kolbenstange der zweiseitigen Kolbenstange 47 entsperrt. Hydraulikflüssigkeit kommt in den einen Zylinderraum 40 und wird aus dem anderen Zylinderraum 39 des Stellzylinders 15 über die Leitung 18 zu der Stelleitung 21a verdrängt. Nach Einstellen der Arbeitsbreite verbleibt der Kolben in einer, beispielsweise der gezeigten Mittellage.

Zum Zwecke des Wendens wird die Zuleitung 6 des Wendezylinders 5 - vor dem selbsttätigen Vertauschen von Zuleitung 6 mit Ableitung 7 - mit Hydraulikflüssigkeit beaufschlagt. Zugleich liegt über die zweite Direktleitung 14 dieser Druck auch in der Kammer 41 des ersten Steuerzylinders 38 an und verschiebt dessen zweistangigen Kolben - in der Zeichnung nach rechts - , wodurch das Rückschlagventil 36 mechanisch entsperrt wird. Das andere Rückschlagventil 35 wird mittels des Druckes der Hydraulikflüssigkeit geöffnet und der Druck steht in der Kammer 39 des Stellzylinders 15 ebenso wie in der einen Kammer des Wendezylinders 5 an. Nachdem auf den Stellzylinder kleinere Momente des Pfluges als beim Wendezylinder 5 anliegen, wird ersterer zunächst betätigt, d.h. seine Kolbenstange 17 vollständig unter Verkleinerung des Volumens des kolbenstangenseitigen Zylinderraumes 40 in die Stellung seiner minimalen Arbeitsbreite ausgefahren. Die verdrängte Hydraulikflüssigkeit fließt über die Leitung 19, das Rückschlagventil 36 und die Leitung 31 zu der Kammer 26 des weiteren Zylinders 25, wodurch der Kolben 27 von seiner nicht gezeigten definierten Ausgangsstellung - in der Zeichnung nach links - unter Verkleinerung des Volumens des anderen kolbenseitigen Zylinderraumes 32 verschoben, so daß die verdrängte Hydraulikflüssigkeit über die erste Direktleitung 13 und die Vorrichtung 8 zu dem nicht gezeigten Tank abfließen kann.

Nach dem durch die Vorrichtung 8 durchgeführten selbsttätigen Vertauschen von Zu- und Ableitungen 6, 7 des Wendezylinders 5, wird nunmehr die erste Direktleitung 13 mit Druck beaufschlagt, so daß in den kolbenseitigen Zylinderraum 32 des weiteren Zylinders 25 Hyraulikflüssigkeit einströmt und den Kolben 27 - in der Zeichnung rechts - verschiebt unter Verkleinerung und Verschiebung des gesamten gespeicherten Volumens an Hydraulikflüssigkeit, bis der Kolben 27 seine definierte Ausgangslage - in der Zeichnung ganz rechts - erreicht hat. Infolgedessen wird das Rückschlagventil 36 hydraulisch geöffnet und verschiebt sich der Kolben des ersten Steuerzylinders 38 - in der Zeichnung nach links - unter mechanischer Öffnung des Rückschlagventils 35 mittels der Kolbenstange 37. Infolgedessen wird die Kolbenstange 17 des Stellzylinders 15 - in der Zeichnung nach links - bewegt, bis sie ihre Ausgangsstellung vor dem Wenden erreicht hat, wobei die Hydraulikflüssigkeit aus dem kolbenseitigen Zylinderraum 39 über die Leitung 18 zur zweiten Direktleitung 14, - nach dem selbsttätigen Umschalten der Zu- und Ablaufleitungen 6, 7 durch die Vorrichtung 8 zur Leitung 6 und von dort zum nicht gezeigten Tank -.

**Patentansprüche**

1.  Anordnung zum Wenden und Einstellen der Arbeitsbreite von Wendepflügen mit einem doppelt wirkenden, hydraulischen Wendezylinder (5), der am Rahmen des Pfluges angreift, mit einem mit dem Wendezylinder (5) hydraulisch verbundenen, doppelt-wirkenden Stellzylinder (15), dem zum Einstellen der Arbeitsbreite eine Kammer (26) mit variablem Volumen zugeordnet ist , und mit einer Hydraulikschaltung (20), durch die beim Wenden zunächst der Stellzylinder (15) auf minimale Arbeitsbreite gebracht und danach erst der Wendezylinder (5) betätigtwird, wobei die eingestellte Arbeitsbreite durch ein bestimmtes Volumen an Hydraulikflüssigkeit in der Kammer (26) gespeichert ist, nach dem Wenden der Stellzylinder (15) aufgrund des in der Kammer (26) gespeicherten Volumens an Hydraulikflüssigkeit von seiner Stellung minimaler Arbeitsbreite in die zuvor eingestellte Arbeitsbreite gebracht wird, wobei die Zu- und Ablaufleitung (6, 7) des Wendezylinders selbsttätig dann vertauscht wird, wenn der Kolben (12) des Wendezylinders (5) sich in der der halben Pflugwendung entsprechenden einen Endstellung befindet, **dadurch gekennzeichnet, daß** ein weiterer, durch einen Kolben (27) getrennter Zylinder (25) vorgesehen ist, daß dessen erster Zylinderraum (26) die Kammer bildet, daß die Hydraulikschaltung (20) die vor dem Wenden zum Einstellen der minimalen Arbeitsbreite aus dem Stellzylinder (15) verdrängte Hydraulikflüssigkeit der Kammer in Form des ersten Zylinderraumes (26) des weiteren Zylinders (25), ausgehend von einer definierten Ausgangsstellung des Kolbens (27), zuführt, daß dessen zweiter Zylinderraum (32) über eine erste Direktleitung (13) zu Beginn des Wendens und vor dem selbsttätigen Vertauschen mit der zum Tank und danach mit der zu der Pumpe führenden Leitung (6, 7) des Wendezylinders (5) verbunden ist und die durch das Speichern in dem ersten Zylinderraum (26) des weiteren Zylinders (25) verdrängte Hydraulikflüssigkeit abgibt und daß nach dem selbsttätigen Vertauschen der über die Direktleitung mit der Zulaufleitung (6) des Wendezylinders (5) verbundene zweite Zylinderraum (32) des weiteren Zylinders (25) mit Hydraulikflüssigkeit beaufschlagt wird, so daß der Kolben (27) unter vollständiger Verdrängung des gespeicherten Volumens in der Kammer (26) über die Hydraulikschaltung (20) in den Stellzylinder (15) und unter Herstellung der eingestellten Arbeitsbreite des Stellzylinders (15) seine definierte Ausgangslage wieder einnimmt.

2. Anordnung nach Anspruch 1, **dadurch gekennzeichnet, daß** der weitere Zylinder (25) und der Stellzylinder (15) einstückig ausgebildet sind.

3. Anordnung nach Anspruch 1 oder 2, **dadurch gekennzeichnet,** daß der Kolben (27) des weiteren Zylinders (25) eine an dem Zylinder gesondert geführte Stange (28) aufweist.

4. Anordnung nach Anspruch 3, **dadurch gekennzeichnet,** daß die Stange als Hohlzylinder (28) ausgebildet ist und als gesonderte Führung an einem an dem Zylinder (25) festgelegten, gesonderten Hohlzylinder (29) kleineren Durchmessers geführt ist, der mit einer Leitung (30) versehen ist.

5. Anordnung nach Anspruch 3 oder 4, **dadurch gekennzeichnet,** daß die Stange (28) des weiteren Zylinders (25) in der definierten Ausgangslage an dem gesonderten Hohlzylinder (29) anliegt.

6. Anordnung nach einem der Ansprüche 1 bis 5, **dadurch gekennzeichnet,** daß die Arbeitsbreite durch Einstellen des Stellzylinders (15) über die Hydraulikschaltung (20) mittels gesonderter Stelleitungen (21, 21a) ohne Einwirkung auf den weiteren Zylinder (25) und den Wendezylinder (5) erfolgt.

7. Anordnung nach einem der Ansprüche 1 bis 6, **dadurch gekennzeichnet,** daß die Hydraulikschaltung (20) ein erstes Paar Rückschlagventile (35, 36) aufweist, die mittels der zweiseitigen Kolbenstange (37) eines ersten Steuerzylinders (38) wechselweise entsperrbar sind.

8. Anordnung nach Anspruch 7, **dadurch gekennzeichnet,** daß jedes Rückschlagventil (35, 36) mit einem Zylinderraum (39, 40) des Stellzylinders (15) verbunden ist und zu diesen hin öffnet.

9. Anordnung nach Anspruch 7 oder 8, **dadurch gekennzeichnet,** daß der eine Zylinderraum (41) des ersten Steuerzylinders (38) mittels einer zweiten Direkleitung (14) mit der zu Beginn des Wendens und vor dem selbsttätigen Vertauschen zu der Pumpe führenden Leitung (6) des Wendezylinders (5) und der andere Zylinderraum (42) des ersten Steuerzylinders (38) mit der gesonderten Kammer (26) verbunden ist.

10. Anordnung nach einem der Ansprüche 1 bis 9, **dadurch gekennzeichnet,** daß zwischen jeder Stelleitung (21, 21a) und der ersten Direktleitung (13) ein zu dieser hin öffnendes Rückschlagventil (22, 23) vorgesehen ist.

## Claims

1. An arrangement for reversing and setting the working width of hillside ploughs having a double-acting, hydraulic reversing cylinder (5) which engages the plough frame, having an adjusting cylinder (15) which is double acting and is connected hydraulically to the reversing cylinder (5), a chamber (26) having variable volume being assigned to the said adjusting cylinder for setting the working width , and having an hydraulic circuit (20), through which during reversing the adjusting cylinder (15) is initially brought to the minimum working width and only then is the reversing cylinder (5) actuated, in which the set working width is stored by a certain volume of hydraulic fluid in the chamber (26), after reversing the adjusting cylinder (15) is brought because of the volume of hydraulic fluid stored in the chamber (26) from its position of minimum working width into the previously set working width, in which the inlet and outlet line (6, 7) of the reversing cylinder is then transposed automatically, if the piston (12) of the reversing cylinder (5) is located in the one end position corresponding to half the plough reversal, **characterised in that** a further cylinder (25), which is separated by a piston (27), is provided, that its first cylinder space (26) forms the chamber, that the hydraulic circuit (20) supplies the hydraulic fluid to the chamber, in the form of the first cylinder space (26) of the further cylinder (25), starting from a defined starting position of the piston (27); which fluid is displaced from the adjusting cylinder (15) before reversal in order to set the minimum working width, that its second cylinder space (32) is connected, via a first direct line (13) at the beginning of reversal and before automatic transposition, to the line (6, 7) of the reversing cylinder (5) leading to the tank and thereafter leading to the pump, and emits the hydraulic fluid which is displaced by the storage in the first cylinder space (26) of the further cylinder (25); and that, after automatic transposition the second cylinder space (32) of the further cylinder (25), connected via the direct line to the inlet line (6) of the reversing cylinder (5), is acted upon by hydraulic fluid, so that with complete displacement of the stored volume in the chamber (26) into the adjusting cylinder (15 via the hydraulic circuit (20) the piston (27) resumes its defined starting position, while producing the set working width of the adjusting cylinder (15).

2. An arrangement according to claim 1, **characterised in that** the further cylinder (25) and the adjusting cylinder (15) are formed in one piece.

3. An arrangement according to claim 1 or 2, **characterised in that** the piston (27) of the further cylinder (25) has a rod (28) guided separately on the cylinder.

4. An arrangement according to claim 3, **characterised in that** the rod is formed as a hollow cylinder (28) and is guided as a separate guide on a separate hollow cylinder (29) of smaller diameter, which is fixed to the cylinder (25) and is provided with a line (30).

5. An arrangement according to claim 3 or 4, **characterised in that** the rod (28) of the further cylinder (25) engages the separate hollow cylinder (29) in the defined starting position.

6. An arrangement according to any one of claims 1 to 5, **characterised in that** the working width is effected by setting the adjusting cylinder (15) via the hydraulic circuit (20) with the aid of separate adjusting lines (21, 21a) without action on the further cylinder (25) or the reversing cylinder (5).

7. An arrangement according to any one of claims 1 to 6, **characterised in that** the hydraulic circuit (20) has a first pair of return valves (35, 36) which may be unlocked alternately with the aid of the two-sided piston rod (37) of a first control cylinder (38).

8. An arrangement according to claim 7, **characterised in that** each return valve (35, 36) is connected to a cylinder space (39, 40) of the adjusting cylinder (15) and opens thereto.

9. An arrangement according to claim 7 or 8, **characterised in that** one cylinder space (41) of the first control cylinder (38) is connected with the aid of a second direct line (14) to the line (6) of the reversing cylinder (5) which leads to the pump at the beginning of reversal and before automatic transposition and the other cylinder space (42) of the first control cylinder (38) is connected to the separate chamber (26).

10. An arrangement according to any one of claims 1 to 9, **characterised in that** a return valve (22,23) opening to the direct line (13) is provided between each adjusting line (21, 21a) and the said first direct line (13).

## Revendications

1.  Dispositif de retournement et de réglage de la largeur de travail de charrues réversibles comportant un cylindre (5) d'inversion hydraulique à double-effet qui agit sur le cadre de la charrue, comportant, relié hydrauliquement au cylindre d'inversion (5), un cylindre de réglage (15) à double-effet auquel est associée, pour le réglage de la largeur utile, uns chambre (26), de volume variable et comportant une commande hydraulique (20) qui, dans un premier temps lors de l'inversion amène le cylindre de réglage (15) en position de largeur utile minimale et qui, seulement ensuite actionne le cylindre d'inversion (5), la largeur utile étant réglée et mémorisée dans la chambre (26) au moyen d'un volume déterminé de liquide hydraulique, après l'inversion le cylindre de réglage (15) passant de sa position de largeur utile minimale vers la position de largeur utile préréglée sous l'effet du volume accumulé dans la chambre (26), les conduites d'arrivée et de départ (6, 7) du cylindre d'inversion s'interchangeant automatiquement lorsque le piston (12) du cylindre d'inversion (5) se trouve dans une position finale correspondant à une demi-inversion de la charrue, caractérisé par le fait qu'est prévu un autre cylindre (25) séparé par un piston (27), que le premier espace interne (26) de ce cylindre forme la chambre (26), que le liquide hydraulique expulsé du cylindre de réglage (15) avant l'inversion pour le réglage de la largeur utile minimale à partir d'une position d'origine définie du piston (27) est amené par la commande hydraulique (20) vers la chambre ayant la forme du premier espace (26) de l'autre cylindre (25), que, au commencement de l'inversion et avant l'échange automatique, le deuxième espace interne (32) de ce cylindre est relié par une première conduite directe (13) avec la conduite (6, 7) conduisant au réservoir, et ensuite à la pompe du cylindre d'inversion (5) cette première conduite directe délivrant le liquide hydraulique déplace sous l'effet de son accumulation dans le premier espace interne (26) de l'outre cylindre (25), et qu'après l'échange automatique le deuxième espace interne (32) de l'autre cylindre (25) relié par la conduite directe à la conduite d'alimentation (6) du cylindre d'inversion (5), se remplit de liquide hydraulique, de telle sorte que le piston (27), avec expulsion totale du volume accumulé dans la chambre (26) vers le cylindre de réglage (15) au moyen de la commande hydraulique (20) et, avec établissement de la largeur utile préréglée du cylindre de réglage (15), reprend sa position d'origine définie.

2.  Dispositif selon la revendication 1 caractérisé par le fait que l'autre cylindre (25) et le cylindre de réglage (15) sont réalisés en une seule piéce.

3.  Dispositif selon la revendication 1 ou 2, caractérisé par le fait que le piston (27) de l'autre cylindre (25) présente une tige (28) guidée séparément au long du cylindre.

4.  Dispositif selon la revendication 3 caractérisé par le fait que la tige est réalisée en forme de cylindre creux (28) et guidé au long d'un guidage distinct ayant la forme d'un cylindre creux distinct (29) de diamètre plus petit et fixé sur le cylindre (25), le cylindre creux (29) étant muni d'une conduite (30).

5.  Dispositif selon les revendications 3 ou 4 caractérisé par le fait que la tige (28) de l'autre cylindre (25) s'applique dans la position d'origine définie contre le cylindre creux distinct (29).

6.  Dispositif selon l'une des revendications 1 à 5 caractérisé par le fait que la largeur utile résulte du réglage du cylindre de réglage (15) par la commande hydraulique (20) au moyen de conduites de réglage distinctes (21, 21a) sans action sur l'autre cylindre (25) et le cylindre d'inversion (5).

7.  Dispositif selon l'une des revendications 1 à 6, caractérisé par le fait que la commande hydraulique (20) présente une première paire du clapets anti-retour (35, 36) lesquels peuvent être débloqués alternativement au moyen de la tige de piston (37) à deux côtés d'un premier cylindre de commande (38).

8.  Dispositif selon la revendication 7, caractérisé par le fait que chaque clapet anti-retour (35, 36) est relié à un espace interne (39, 40) du cylindre de réglage et s'ouvre en direction de cet espace.

9.  Dispositif selon les revendications 7 ou 8 caractérisé par le fait que l'un des espaces internes (41) du premier cylindre de commande (38) est relié au moyen d'une deuxième conduite directe (14) avec la conduite (6) du cylindre d'inversion (5) conduisant à la pompe au commencement de l'inversion et avant l'échange automatique, et que l'autre espace interne (42) du premier cylindre de commande (38) est relié à la chambre séparée (26).

10. Dispositif selon l'une des revendications 1 à 9 caractérisé par le fait qu'entre chaque conduite de réglage (21, 21a) et la première conduite directe (13) est prévu un clapet anti-retour (22, 23) s'ouvrant en direction de cette conduite directe.

EP 0 306 548 B1

FIG.1

FIG. 2